# EUROPEAN PATENT APPLICATION

(11) **EP 1 621 876 A1**
(43) Date of publication of application: **01.02.2006**
(21) Application number: 04018125.7
(22) Date of filing: 30.07.2004
(51) Int. Cl.: G01N 27/06, G01N 27/07

(54) **Conductivity sensor**

(71) Applicant: Metroglas AG, 8910 Affoltern a.A. (CH); Graziottin, Flavio, 20047 Burgherio (MI) (IT)
(72) Inventor: Graziottin, Flavio, 20047 Burgherio (MI) (IT)
(74) Representative: Müller, Christoph Emanuel

(57) **Abstract**

A conductivity cell comprises an electrode support element (11) and a triplet of electrodes (12a, 12b, 15) arranged on the support element (11). A pair of electrodes (14a, 14b) is arranged in one of the two intermediate areas (13 and 13b) formed between the triplet (12a, 12b, 15). The central electrode of the triplet is connected to a current or voltage generator. The other electrodes of the initial triplet (12b, 15) are attached to the ground. The electrodes (14a, 14b) of the second pair are coupled to a measuring circuit (22).

## Description

The invention relates to a conductivity sensor according to the preamble of claim 1. It is known to use conductivity sensors for analytical purposes, namely for measuring the electrical conductivity of liquid analytes.

The conductivity (expressed in Siemens) of a solid or a liquid is a measure of how the material carries the electrical or ionic current, i.e. allows electrons or ions respectively to pass. The conductivity A is the reciprocal of the resistance R expressed in Ohms **(Ω).**

The specific conductivity X is expressed in Siemens per length unit (Scm⁻¹) as an absolute measurement value. It is defined as the conductivity measured over a length of 1 cm with an electrode surface area of 1 cm^2, and given by the following equation: X = C x A
wherein C = 1 / A is the measurement cell constant where 1 defines the distance between the electrodes (in cm) and A defines the electrode surface area (in cm²).

For measuring the conductivity of analytes, several types of conductivity cells are known. Traditionally, so called two-electrode cells have been used. Such cells which have existed since the late 19^{th} century are based on two planar electrodes facing each other at a given distance. The best performance is obtained by using platinum as the electrode material. In order to produce less expensive electrodes, other possible materials such as carbon, nickel and stainless steel have been used. An alternating current or voltage having a constant amplitude is applied to the two electrodes. The current or voltage may be a square or a sinusoidal signal. The current or voltage generates a voltage or current respectively when the cell is immersed into the analyte. This measured quantity is amplified, if necessary, and recorded. This allows determination of the resistance of the analyte in accordance with Ohm's law and finally the conductance. Using the cell constant and temperature correction the conductivity maybe calculated.

Such two-electrode cells have certain drawbacks. The main limitation is due to the polarisation of the working electrode surface due to the current flow. The degree of polarisation is a function of the current flow per unit area of the measuring electrodes. In order to minimise this problem, platinum electrodes are plated with a thin, electrically conductive, black platinum layer. This is achieved by electrolysis at constant current density in a chloroplatinic acid solution. The high porosity of the black platinum layer increases the contact surface area between the electrode surface and the analyte thereby reducing the polarisation effect. One major drawback of such cells is that the black platinum layer is very fragile, e.g. cannot be touched by fingers. It's porosity favours the adsorption of organic, colloidal or particulate material which may be present in the analyte. Therefore, the black platinum layer must be removed and plated again quite frequently. As most end users are unable to accomplish such operation, cells with contaminated electrodes must be discarded or returned to the manufacturer for maintenance or require frequent calibration.

A further drawback of such two-electrode systems is their rather limited linearity for a specific cell geometry. This necessitates manufacturers to produce and end users to buy conductivity cells with different electrode surfaces and spacing distances i.e. with different cell-constants. Several different two-electrode conductivity cells with different cell-constants are required to allow reliable conductivity measurements over the wide range of water types such as distilled water, tap or fresh water, sea water or waste water.

In order to overcome these drawbacks, a four-electrode cell approach has been developed recently. The cell design is usually based on four ring-shaped electrodes which are embedded in a insulating material, typically a glass tube, at a given spacing distance. In these cells, the excitation voltage which creates a current is applied to the two outer electrodes. The current which is generated when the cell is immersed in the liquid causes a voltage drop due to the electrical conductivity of the analyte between the two inner electrodes. This voltage can be measured by high impedance input amplifiers which prevent any current flow at the two measuring inner electrodes and thus also prevent electrode polarisation. There is thus no need for black platinum platings.

However, such four-electrode cells still have certain drawbacks. The geometrical design of the cell requires one or more holes for flushing of the cell with the analyte to be measured. A part of the current flowing from the excitation electrode to which the excitation voltage is applied to the counter-electrode, which represents the ground, flows through the hole. The ground electrode is thus reached from outside of the cell. This represents a problem when the cell is placed in a relatively small container. The wall of the container will alter the external current flow depending on the distance between the cell and in particular its hole and the wall. In practice, the sensor suffers from a "wall effect". If the hole diameter for venting the cell is very small, the error potentially generated might be smaller, typically around 1%. Flushing of the cell in these cases becomes difficult. If the hole is bigger, flushing of the cell may be acceptable but the error due to the "wall effect" may become as large as 10% of the reading.

There are further known sensors for environmental or oceanographic applications, where a self-flushed cell with seven platinum rings deposited in the slots of a quartz tube are used. A central ring is excited with alternate current flowing to both the outermost rings. Two adjacent pairs of rings sense the relative drop in voltage due to the electrical conductivity of the measured water. The cell is mounted in a special cylindrical body which is filled with silicone oil and provided with a rubber bellow or simply filled with a solid material. In view of its size, this cell can not easily be used for laboratory purposes. Furthermore, it is very expensive to manufacture.

It is an object of the present invention to overcome the drawbacks of the prior art, especially to provide a conductivity cell having substantially no electrode polarisation and which, in particular, is not influenced by external objects such as the wall of the container in which the analyte is contained. It is a further object of the invention to provide a conductivity cell which can be easily manufactured in an economic manner. It is also a further object of the invention to provide a conductivity cell which can be easily cleaned by the user.
According to the present invention, these objects are resolved with a conductivity cell according to the preamble of the independent claims.

The conductivity sensor according to the invention comprises an electrode support element. A triplet of electrodes is arranged on the electrode support element, defining intermediate areas between the electrodes. An additional pair of electrodes is arranged on the electrode support element, in one of the two intermediate areas between the electrodes of the triplet. The central electrode of the triplet (the excitation electrode) is coupled or adapted to be coupled to a generator of an excitation voltage which creates a current whereas the outer two electrodes of the triplet are connected to the ground. The electrodes of the second pair (the measuring electrodes) are coupled or adapted to be coupled to a measuring circuit. This measuring circuit allows the determination of a voltage drop due to the electrical conductivity of the analyte between the two measuring electrodes. As in conventional four electrode cells, application of a current to the excitation electrode of the triplet generates a current towards the outer, grounded electrodes and consequently generates a voltage drop across the second, inner, pair of electrodes.

According to the present invention, the conductivity sensor is provided with a triplet of electrodes compared to a doublet in the case of a four-electrode cell. This further electrode, being also connected to the ground and thus, enclosing the generator excitation electrode on both sides with a grounded electrode, eliminates stray currents between the excitation electrode and the grounded electrodes. As no stray current is present, the risk of influencing the behaviour of the conductivity cell by external objects no longer exists. Furthermore if, for any reason, an electrical current is circulating in the analyte to be measured, this current cannot influence or alter the internal conductivity measurements in view of the two grounded electrodes as the cell is electrically shielded.

According to a preferred embodiment of the invention, the electrode support element is formed as a tube made from an isolating material, typically a glass tube. Glass tubes are easy to manufacture, and have a good mechanical and chemical stability.

According to a further preferred embodiment of the invention, the electrodes are formed as ring or circular electrodes which are arranged on the outer surface of tubular electrode support element. This arrangement is particularly easy to manufacture. Of course, other shapes of supports and electrodes would be basically conceivable.

The electrode support element and the electrodes are preferably surrounded by a protective housing forming a defined gap for the analyte between an inner surface of the sleeve and the electrode support elements and the electrodes, thus providing a defined cell constant. The analyte flows into this gap when the cell is immersed into the analyte.

The housing is preferably provided with at least one opening for entry or exit of the analyte. The opening is typically arranged adjacent to the further, grounded electrode. The grounded electrode prevents flow of current through this opening. It would also be conceivable to arrange these one or more holes further away from the excitation electrode than the further grounded electrode.

Typically, the electrodes are made of platinum. Other material known to those skilled in the art may be possible.

According to another aspect of the present invention, a conductivity cell comprises an electrode support element which is surrounded by a housing. The housing is optionally removably connected to said electrode support element. With this removable housing the electrodes, the electrode support and the housing can be easily cleaned. While this embodiment alone has considerable advantages, it is preferably used in context with a conductivity cell with more than four electrodes a described above.

According to a further preferred embodiment of the invention, the conductivity cell has a shaft holding said electrode support element. The housing is removably secured to this shaft. The shaft allows for an easy manufacturing of the sensor. Typically the housing may be held on the shaft by means of one or more O-rings.

Especially if the electrode support element is formed as a glass tube, the electrodes may be coupled to the voltage generator and/or measuring apparatus and/or to the ground by lead wires attached to the electrodes and passing through the electrode support element. Typically, the wires may pass through holes formed in a support element formed as a glass tube.

According to another preferred embodiment of the invention, the sensor may also be provided with a temperature sensor inside the glass tube and preferably in correspondence of its tip for measuring the temperature of the analyte.

According to the present invention, it would also be possible to arrange more than one pair of ring shaped measuring electrodes on an electrode support, e.g. two pairs of measuring electrodes such as to form a 7 electrode cell.

The present invention is especially suitable for laboratory purposes, especially for measurement of the salinity and the measurement of the quality of water (surface water, process water, waste water and pure water according to the recommendation of the USP Pharmacopoeia USP24-NF19). The use of preferably 5 electrodes on an electrode support leads to reliable measurement while keeping the outer dimensions of the cell sufficiently small for laboratory use.

The present invention is more fully set forth in the following description of a preferred embodiment and by reference to the drawings, which show:
- Figure 1: a perspective view of a conductivity cell according to the prior art,
- Figure 2: a schematic electronic representation of the conductivity cell of figure 1,
- Figure 3: a perspective view of a conductivity cell according to the present invention,
- Figure 4: a schematic electronic representation of the conductivity cell of figure 3,
- Figure 5: a more detailed view of a conductivity cell according to the invention with a measuring device,
- Figure 6: a more detailed view of the conductivity cell assembled according to the present invention, and
- Figure 7: a detailed view of a 7-electrode conductivity cell using two pairs of measuring electrodes.

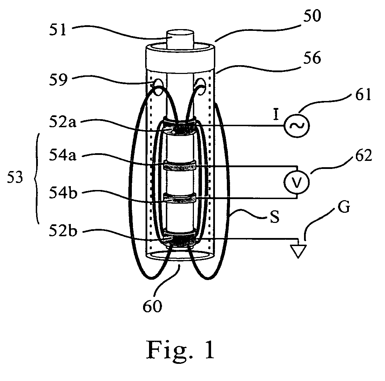

Figure 1 shows a sensor 50 known from the prior art. The sensor 50 comprises a tubular electrode support element 51. On the support element 51, a pair of outer electrodes 52a, 52b and a pair of inner electrodes 54a, 54b are arranged. Between the pair of outer electrodes 52a, 52b, an intermediate space 53 is formed. A pair of inner electrodes 54a, 54b is arranged in this intermediate space 53. The electrode support element 51 and the electrodes 52a, 52b, 54a, 54b arranged thereon are surrounded by a housing 56. The housing 56 comprises two openings 59. Analyte entering the conductivity cell through an end opening 60 exits through the gap formed between the housing 56 and the support element 51 through the openings 59.

An excitation voltage V which creates a current is generated by a generator 61 attached to the outer electrode 52a. The second outer electrode 52b is connected to the ground G. A measurement circuit 62 sensing the voltage drop due to the electrical conductivity of the analyte between the electrodes 54a, 54b is coupled to these electrodes. Because of the openings59, a stray current S is flowing from the electrode 52a to the grounded electrode 52b outside the space delimited by the housing 56.

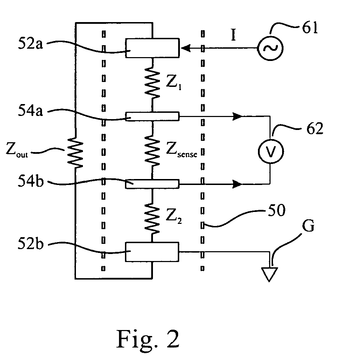

Figure 2 schematically shows the equivalent electronic components of the conductivity cell 50. While impedances Z1, Z2 and Zₛₑₙₛₑ are formed within the conductivity cell, there is a further impedance Zₒᵤₜ formed outside the housing 56. As the impedance Zₒᵤₜ may vary depending on objects arranged in the surroundings of the conductivity cell, the accuracy of readings made by such a cell is affected.

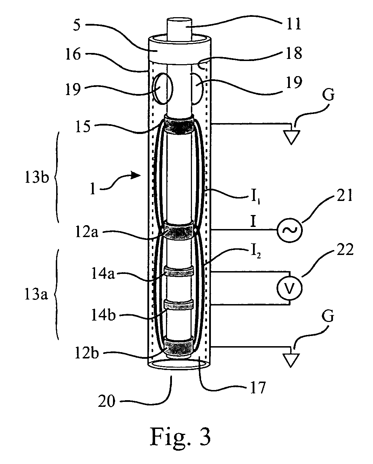

Figure 3 shows how the cell overcomes this drawback. A conductivity sensor 1 comprises in a similar way as the prior art sensor shown in figures 1 and 2 an electrode support element 11 on which a triplet of electrodes 12a, 12b, 15 is arranged. Between the pair of electrodes 12a, 12b and between the pair of electrodes 12a and 15 there are two intermediate spaces 13a and 13b in either of which electrodes 14a, 14b may be placed.

The triplet of electrodes 12a, 12b, 15 is arranged on the support element 11 in such a way, that the excitation electrode 12a is arranged between the two grounded electrodes 15 and 12b. The electrode support element 11 and the electrodes 12a, 12b, 14a, 14b and 15 are surrounded by a housing 16. A gap 17 is formed between the inner surface 18 of the housing 16 and the electrode support element 11. Two openings 19 are formed in the housing 16 in a position adjacent to the electrode 15. An end opening 20 at the bottom of the conductivity cell 1 allows entry of an analyte which can exit the conductivity sensor 1 through the openings 19. The body 5 of the cell holds and seals the support element 11.

The electrode support element 11 is typically made of glass. The electrodes are made of platinum. The housing 16 is typically made from a preferably transparent material such as polycarbonate, Plexiglass, acrilic or glass.

The openings 19 typically have a diameter of between 1 mm and 10 mm or more, depending on the cell size and, in particular for Cylindrical cells, its diameter.

The electrode 12a of the triplet of electrodes is connected to a generator 21 generating an excitation voltage V which creates a current. The remaining two electrodes 12b and 15 are connected to ground. A measuring circuit 22 is coupled to the electrodes 14a, 14b of the second pair. When a voltage created by the generator 21 is applied to the electrode 12a, currents flow towards the grounded electrodes 12b and 15 as soon as the conductivity cell is immersed into a conductive analyte. Two partial currents I₁ and I₂ are flowing towards the grounded electrodes 12b and 15, respectively. As the openings 19 are located neighbouring the electrode 15 which is grounded, there are no stray currents between the excited electrode 12a and the grounded electrodes 12b, 15 passing outside the space delimited by the housing 16. Of. It would also be possible to locate one or more openings 19 further away from the excited electrode 12a than the further electrode 15 or to arrange a plurality of openings 19 above the electrode 15.

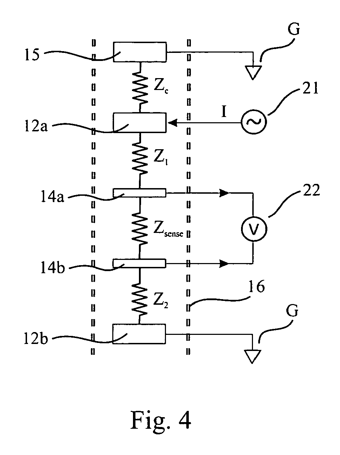

Figure 4 represents the electrical schematic of the sensor shown in figure 3. There is an additional impedance Z_{c} formed between the grounded electrode 15 and the excited electrode 12a. As this impedance is formed exclusively within the space delimited by the housing 16, this impedance is not influenced by outer objects.

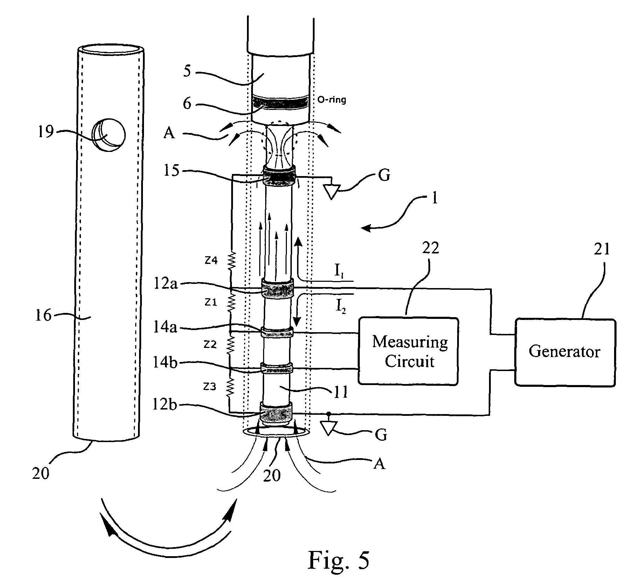

Figure 5 shows a more detailed view of a complete measuring unit 10 embodying the sensor 1. Like reference numerals designate like objects as in Figure 3 and 4.

The housing 16 is optionally removably attached to a shaft 5 by means of an O-ring 6. Additional O-Rings may be used to improve the housing stability. The housing 16 is shown in figure 5 in dashed lines attached to the shaft 5 and as a separate element removed from the shaft 5. For cleaning of the conductivity cell 1 the housing 16 can be removed as shown in figure 5 and the platinum electrodes can be cleaned or degreased by use of a liquid soap. The O-ring 6 allows for very easy removal of the housing 16. Figure 5 shows the measuring circuit 22 and the excitation circuit 21.

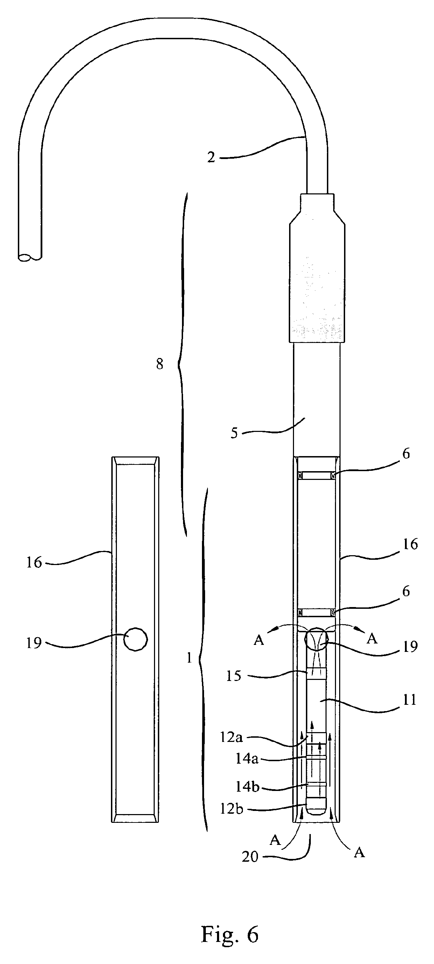

Figure 6 shows a measuring head 8 embodying a conductivity cell 1 according to the present invention. The shaft 5 is attached to a measuring instrument by means of cables 2. The cables 2 are passing through the shaft 5 and through the interior of the electrode support element 11 in order to be attached to the electrodes arranged on the support element. The cables are not shown in detail in figure 6. Analyte A, into which the head 8 is immersed enters the conductivity sensor 1 through the end opening 20 and may exit the sensor through the openings 19.

The cell may be further provided with a temperature sensor (not shown) for determination of the temperature of the analyte.

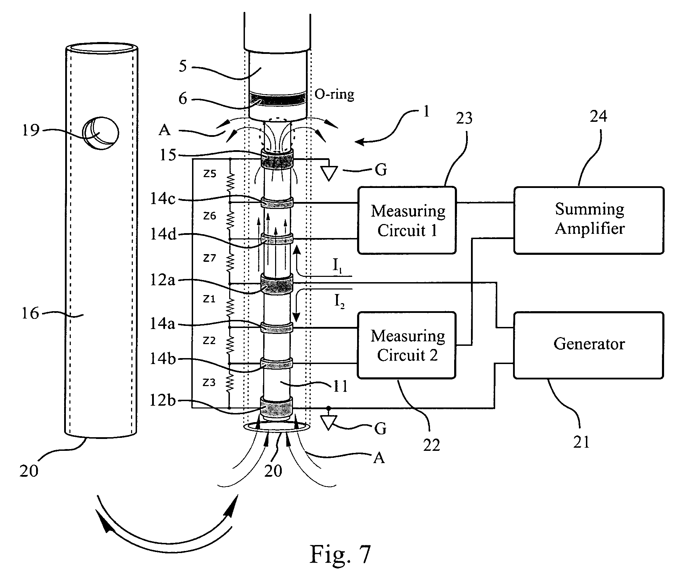

Figure 7 shows an embodiment with a total of seven electrodes. Like reference numerals as in Fig. 5 designate like parts. Compared to the embodiment of Fig. 5, two electrodes 14c, 14d are in addition arranged between the grounded electrode 15 and the excited electrode 12a. Impedances Z5, Z6 and Z7 are formed between the electrodes 15, 14c and 14d, respectively. These electrodes 14c, 14d are connected to a second measuring circuit 23. The measuring circuit 22 and the second measuring circuit 23 are connected to a summing amplifier 24.

## Claims

1. A conductivity cell (1), comprising
an electrode support element(11),
a triplet of electrodes (12a, 12b, 15) arranged on said electrode support element (11), delimiting two intermediate areas (13a, 13b) on said electrode support element (11),
a pair of electrodes (14a, 14b) arranged on said electrode support element (11) within one of said intermediate areas (13a, 13b),
wherein an excitation electrode (12a) of said triplet is arranged between two other electrodes (12b,15) of said triplet and is adapted to be coupled to an excitation circuit (21)
wherein said other electrodes (12b, 15) of the triplet are adapted to be coupled to the same potential, preferably to the ground and
wherein said electrodes (14a, 14b) of said second pair of electrodes are adapted to be coupled to a measuring circuit(22)

2. A conductivity cell (1) according to claim 1, wherein the electrode support element (11) is formed as a hollow tube made of an isolating material, preferably glass.

3. A conductivity cell (1) according to claim 2, wherein said electrodes (12a, 12b, 14a, 14b, 15) are circular electrodes arranged on said tubular electrode support element (11).

4. A conductivity cell (1) according to one of the claims 1 to 3, wherein said electrode support element (11) and said electrodes (12a, 12b, 14a, 14b, 15) are surrounded by a housing (16) forming a gap (17) for an analyte (A) between an inner surface (18) of the housing (16) and said electrode support element (11) and having an end opening (20) for entry of the analyte (A) into said gap (17).

5. A conductivity cell (1) according to claim 4, wherein said housing (16) is provided with at least one opening (19), wherein said opening (19) is preferably arranged adjacent to one of said grounded electrodes (15) of said triplet is arranged distant from said end opening (20).

6. A conductivity cell (1) according to one of the claims 1 to 5, wherein at least one of said electrodes (12a, 12b, 14a, 14b, 15) is made of platinum.

7. A conductivity sensor, preferably according to one of the claims 1 to 6, comprising an electrode support element (11) and a housing (16) surrounding said support element (11), **characterised in that** said housing (16) is directly or indirectly removably connected to said electrode support element (11).

8. A conductivity sensor according to claim 7, wherein said sensor (1) further comprises a shaft (5) carrying said electrode support element (11) and wherein said housing (16) is removably attached to said shaft (5).

9. A conductivity cell according to claim 8, wherein at least one O-ring (6) for holding said housing (16) is arranged on said shaft (5).

10. A conductivity cell according to one of the claims 1 to 9, wherein lead wires attached to the electrodes are arranged within said electrode support element (11).

11. A conductivity cell according to one of the claims 1 to 10, wherein the conductivity cell is further provided with a temperature sensor.

12. A conductivity cell according to one of the claims 1 to 11, wherein the cell is further provided with a second pair of measuring electrodes arranged on said electrode support element (11).

13. The use of a cell according to one of the claims 1 to 12 for laboratory uses.
